# EUROPEAN PATENT APPLICATION

(11) **EP 2 259 623 A1**
(43) Date of publication of application: **08.12.2010**
(21) Application number: 10179381.8
(22) Date of filing: 11.03.2005
(51) Int. Cl.: H04W 36/00

(54) **Method and apparatus for handover of a wireless transmit/receive unit between a cellular access network and a wlan**

(30) Priority: 12.03.2004 US 552561 P
(62) Divisional of application: 09162291.0
(71) Applicant: INTERDIGITAL TECHNOLOGY CORPORATION, Wilmington, DE 19810 (US)
(72) Inventor: Shaheen, Kamel M., King of Prussia, PA 19406 (US); Terry, Stephen E., Northport, NY 11768 (US); Kiernan, Brian Gregory, Downingtown, PA 19335 (US)
(74) Representative: Hjalmarsson, Magnus Axel

(57) **Abstract**

A method and wireless transmit/receive unit (WTRU) for switching a radio access technology (RAT) between a cellular access network and a wireless local area network (WLAN) are disclosed. The WTRU receives a service from a core network via a cellular access network. The WTRU receives a message via the cellular access network, wherein the message includes information that identifies one or more WLANs. The WTRU selects one of the WLANs from the message and receives the service from the core network via the selected WLAN.

## Description

### FIELD OF INVENTION

The present invention is related to a wireless communication system. More particularly, the present invention is a method and system for switching a radio access technology (RAT) between wireless communication systems being connected to each other while implementing different RATs with a multi-mode wireless transmit/receive unit (WTRU).

### BACKGROUND

Universal mobile telecommunication systems (UMTS) and wireless local area network (WLAN) technologies are widely used in current wireless communication systems. Since the coverage areas of UMTS and WLANs are often overlapped, an inter-networking of UMTS and WLAN networks has been developed. An inter-working WLAN (I-WLAN) is a WLAN with a connection to a UMTS core network so that the services provided by the UMTS may be forwarded through the I-WLAN.

Currently, the network selection of an I-WLAN requires that a WTRU scan for available WLAN systems using their service set identifiers (SSIDs). The scanning of SSIDs can be done either passively or actively. In passive scanning, the WTRU observes information broadcast from each WLAN and determines its availability according to the signal strength. In active scanning, the WTRU transmits a probe request containing a specific WLAN SSID and waits for confirmation of the availability from that WLAN.

These techniques, however, do not provide any indication of the WLAN (SSID) that provides access to UMTS based services. Several solutions have been devised including broadcasting of the home public land mobile network (PLMN) identification over the WLAN broadcast channel. However, such techniques are vulnerable to spoofing, (disruptive WLAN operators may broadcast the same SSIDs and PLMN ID), since WLAN SSIDs are not unique.

Therefore, the selection of a UMTS based I-WLAN for connecting to UMTS based services can be a problem due to the large number of WLAN networks (SSIDs) that the WTRU must choose from and the ease of using similar SSIDs by disruptive operators in order to direct the traffic toward their networks. Accordingly, there is a need for a method and system for providing an indication of WLANs (SSIDs) that provide access to UMTS based services.

### SUMMARY

The present invention is a method and system for switching a radio access technology (RAT) between wireless communication systems connected to each other while implementing different RATs with a multi-mode WTRU. A plurality of wireless communication systems are deployed with overlapping coverage areas wherein each wireless communication system implements different RATs and are connected to each other such that a service that is provided by one wireless communication system may be provided through the other wireless communication system. Each wireless communication system transmits an indication of the existence of an inter-working wireless communication system in a coverage area of each wireless communication system. The WTRU receives the indication and information regarding the inter-working wireless communication system. The WTRU then initiates a handoff to the inter-working wireless communication system using the received information, whereby the WTRU continues to receive the same services that the WTRU receives from the currently connected wireless communication system through the inter-working wireless communication system. The present invention helps reduce the time taken by the multi-mode WTRU to select and authenticate the inter-working wireless communication system.

### BRIEF DESCRIPTION OF THE DRAWINGS

A more detailed understanding of the invention may be had from the following description of a preferred embodiment, given by way of example and to be understood in conjunction with the accompanying drawing wherein:

Figure 1 is a block diagram of a wireless communication system in accordance with the present invention;

Figure 2 is a flow diagram of a process for switching a radio access technology (RAT) in accordance with the present invention; and

Figure 3 is a signaling diagram of a process for exchanging messages among a WTRU, a UMTS terrestrial radio access network (UTRAN), and a WLAN for handoff from the UTRAN to the WLAN in accordance with the present invention.

### DETAILED DESCRIPTION OF THE PREFERRED EMBODIMENTS

Hereafter, the terminology "WTRU" includes but is not limited to a user equipment, a mobile station, a fixed or mobile subscriber unit, a pager, or any other type of device capable of operating in a wireless environment. When referred to hereafter, the terminologies "base station" and "access point (AP)" include but are not limited to a Node-B, a site controller or any other type of interfacing device in a wireless environment.

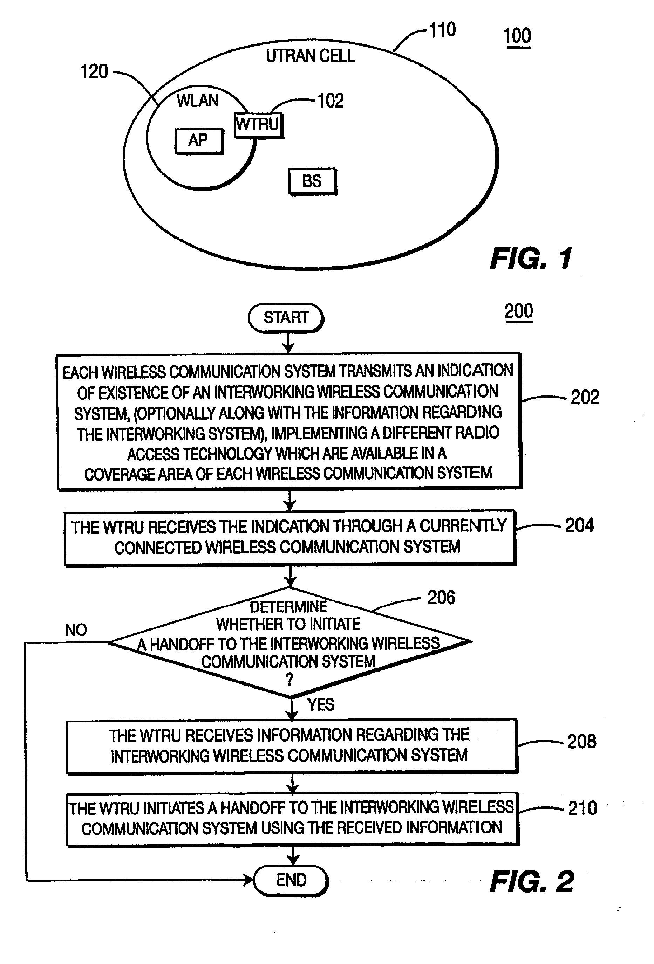

Figure 1 is a block diagram of a wireless communication system 100 in accordance with the present invention. The system 100 comprises at least two different types of wireless communication networks 110, 120 implementing different radio access technologies (RATs). For example, as shown in Figure 1, one type of wireless network is a UMTS terrestrial radio access network (UTRAN) (see UTRAN cell 110) preferably operating under third generation partnership project (3GPP) standards and the other type of wireless network is a WLAN 120 preferably operating under IEEE 802.11 standards. For purposes of describing the present invention, only one UTRAN cell 110 is shown. However, it is noted that, a UTRAN typically includes a plurality of cells, as known to those skilled in the art.

For convenience, the present invention is described with reference to a UTRAN and a WLAN. However, it should be noted that it is obvious to those skilled in the art that the present invention may be applied to any type of wireless communication system and further that there could be more than two different types of wireless communication networks.

Coverage areas of the wireless communication systems 110, 120 are overlapping with respect to each other. In a UTRAN-WLAN example, as is used herein, the coverage area of the WLAN 120 typically falls within the larger coverage area of a UTRAN cell 110. The WLAN 120 is connected to the UTRAN cell 110 so that the services provided within the UTRAN cell 10 may be forwarded to a multi-mode WTRU 102 through the WLAN 120. The WLAN 120 may therefore also be referred to as an I-WLAN, as explained above. A multi-mode WTRU 102 located in the overlapping area may access both types of wireless communication networks simultaneously, and may receive services provided by one network through the other network.

In accordance with the present invention, the UTRAN cell 110 sends an indication of the existence of any I-WLANs, or alternatively a list of service set identifiers (SSIDs) of the I-WLANs, located in the UTRAN cell 110 to the WTRU 102. The indication or the list of SSIDs may be transmitted as desired. For example, they may be broadcast via a broadcast control channel (BCCH) or may be sent via a dedicated control channel (DCCH). Where a system 100 is configured to transmit the indication or list over BCCHs, WTRUs may, but are not required to, provide their WLAN capability (i.e. whether or not they are capable of operating in a WLAN) upon connecting to the UTRAN cell 110 or upon establishment of a radio bearer. Where a system 100 is configured to transmit the indication or list over DCCHs, WTRUs are preferably required to provide their WLAN capability upon connecting to the UTRAN cell 110 or upon establishment of a radio bearer.

In accordance with a first embodiment, only an indication of the existence of any I-WLANs within the UTRAN cell 110 is transmitted. As mentioned above, the indication may be transmitted as desired, but is preferably transmitted over the cell's 110 broadcast control channel (BCCH) or over a dedicated control channel (DCCH). The WTRU 102 receives the indication and if a predetermined criteria for inter-system handoff (i.e. a predetermined criteria for handing over a WTRU 102 from the UTRAN cell 110 to the WLAN 120) is satisfied, the WTRU 102 requests the list of SSIDs from the UTRAN cell 110. It should be noted, of course, that the predetermined criteria may be any type of criteria and the evaluation of whether to actually perform an inter-system handoff may be evaluated by the WTRU 102 or by any of the network components of the network from which a handoff may occur, which in this case is a UTRAN.

Once the WTRU 102 receives the SSID list, the SSIDs are used, passively or actively, for scanning, association, and authentication of an appropriate AP within the I-WLAN 120. This scheme ensures that the WTRU 102 accesses the right WLAN AP that provides a connection to the UTRAN cell 110 and its 3GPP based services. Where the inter-system handoff criteria is met and there is an appropriate AP within the I-WLAN 120 to handoff to, the WTRU 102 is handed-off to the I-WLAN 120 and begins operating therein.

As an alternative, the WTRU 102 may request the list of SSIDs prior to evaluation of the inter-system handoff criteria in order to confirm whether there is an appropriate AP available prior to performing the evaluation.

In accordance with a second embodiment, the system 100 operates as mentioned above, but in this embodiment instead of first transmitting an indication of the existence of any I-WLANs within the UTRAN cell 110, the UTRAN cell 110 simply transmits the list of SSIDs. This may provide enhance performance where the number of SSIDs is not too high. Whether to implement the first or second embodiment is operator preference.

Figure 2 is a flow diagram of a process 200 for switching a RAT in accordance with the present invention. A plurality of wireless communication systems are deployed with overlapping coverage areas. Each wireless communication system implements a different RAT and are configured such that a service that is provided by one wireless communication system may be provided through the other wireless communication system.

Each wireless communication system transmits an indication of the existence of an inter-working wireless communication system, optionally along with information of the alternative wireless communication system (including an identifier, frequency, etc), which implements a different RAT within the coverage area of each wireless communication system (step 202). The indication and/or the information may be broadcast to WTRUs or may be sent via a dedicated channel for the WTRUs. The WTRU receives the indication and/or the information through a currently connected wireless communication system (i.e. the wireless communication system to which the WTRU is currently connected) (step 204).

Alternatively, the indication and/or the information may be transmitted in response to a request message for the information or a capability report from the WTRU. In response, the currently connected wireless communication system sends an indication of availability of the inter-working wireless communication system and/or the information about the inter-working wireless communication system to the WTRU. In such case, the indication and/or the information may be transmitted via a DCCH to the WTRU.

After receiving the indication and/or the information, it is determined whether to initiate a handoff to the inter-working wireless communication system (step 206). As mentioned above, this determination may be made at the network or at the WTRU and may be based on any predetermined criteria, as desired. The handoff may be initiated by a user's request or may be initiated autonomously based on service requirements. The WTRU may display the availability of the inter-working wireless communication system on its display screen or provide an alarm alerting the user of the same. If it is determined to handoff the WTRU to the inter-working wireless communication system and if only the indication has been sent, the WTRU requests the information regarding the inter-working wireless communication system and receives it from the currently connected wireless communication system (step 208). If the information has been transmitted along with the indication or is simply sent without any indication, step 208 is skipped. The WTRU then initiates a handoff procedure using the received information (step 210).

In the context of a UTRAN-WLAN example as used herein, the information may be SSIDs of the I-WLANs, and optionally may further include a corresponding PLMN ID and the corresponding coordinates, (i.e., location), of each SSID. The WTRU initiates active or passive scanning for the identified WLANs after receiving the SSIDs of the I-WLANs. The WLAN scanning may be limited to WLANs identified by the received SSIDs.

Association with a particular WLAN AP may be based on channel quality measurements. If channel quality measurements from all WLANs are under a predefined threshold, the initial UTRAN connection is maintained. If an acceptable WLAN AP is found, the UTRAN may be notified of the cell change over the DCCH of the cell change. Connection security may be enabled by information such as wired equivalent privacy (WEP) information. The WTRU continues to scan for APs of common SSIDs of WLAN association and disassociation procedures. If an acceptable AP is not found, the WTRU may either scan for an alternate WLAN identified by a known SSID, or revert back to the UTRAN connection. In this case, an inter RAT cell change indication may be signaled. The choice to switch RATs may either be autonomous based on quality measurements within a predefined threshold or manually controlled by user input. After the RAT cell change, the WTRU continues to receive the same services that the WTRU receives from the currently connected wireless communication system through the alternative wireless communication system.

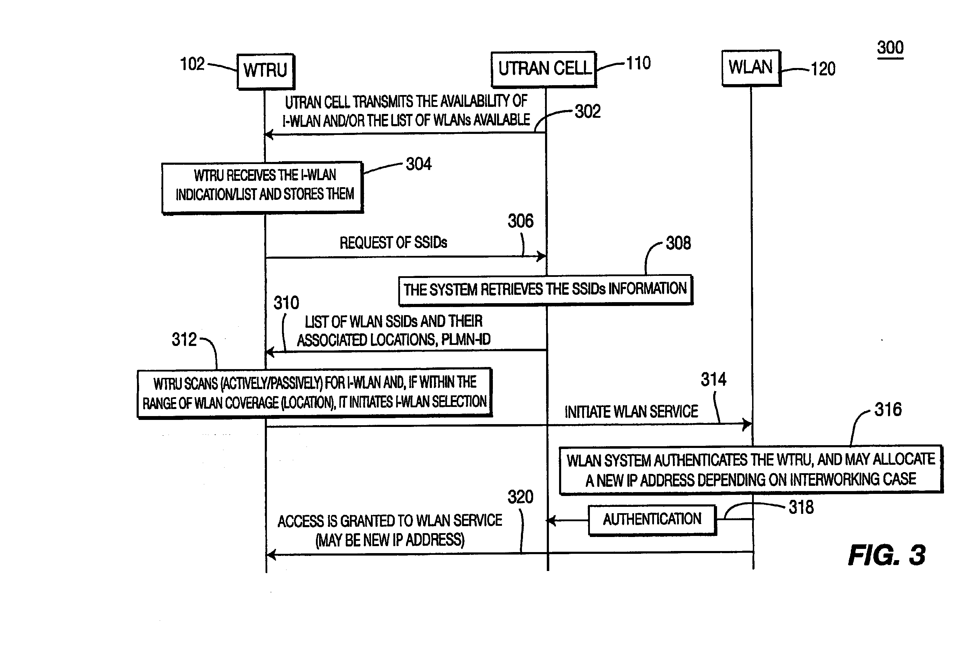

Figure 3 is a signaling diagram of an exemplary process 300 for exchanging messages among a WTRU 102, a UTRAN cell 110, and a WLAN 120 for handoff from the UTRAN cell 110 to the WLAN 120 in accordance with the present invention. The UTRAN cell 110 transmits an indication of availability of any I-WLANs, (and/or optionally along with a list of SSIDs of available WLANs) (step 302). The transmission may be triggered by a report from the WTRU 102 indicating WLAN capability of the WTRU 102. The WTRU 102 receives the I-WLAN availability indication and/or list of SSIDs (step 304). In the case that only the indication is transmitted, the WTRU 102 sends a request for SSIDs of WLANs (step 306). In the case that the SSID list is transmitted along with the indication or the list is sent without any indication, steps 306-310 are omitted. Upon receipt of the request, the UTRAN cell 110 retrieves the SSIDs information (step 308). The UTRAN cell 110 transmits the list of WLAN SSIDs and optionally their associated locations and PLMN ID (step 310). After receiving the list of SSIDs, the WTRU 102 stores them in a memory and scans, either actively or passively, for an appropriate AP using the list (step 312). If the WTRU 102 is within the range of the WLAN coverage, the WTRU 102 initiates an I-WLAN selection (step 312). The WTRU 102 initiates a WLAN service with the selected WLAN (step 314). The WLAN 120 authenticates the WTRU 102 and may allocate a new IP address, if necessary, which typically depends on the type of inter-working scheme being implemented, as explained in more detail below (step 316). After authentication is completed at step 318, access to the WLAN service is granted for the WTRU 102 (step 320).

As mentioned above, different inter-working schemes may be used for connecting the I-WLAN to the UTRAN. For example, under the current wireless communication standards, the I-WLAN may be connected to the 3GPP system via a core network, (i.e., packet date gateway (PDG)), or via the UTRAN as a pipe. In the latter case, no new IP address is assigned in case of I-WLAN reselection, (handoff from the 3GPP system to I-WLAN). In the former case, (i.e., PDG based interworking), new procedures are used to allocate an IP address to the WTRU operating in the I-WLAN. These procedures are different than those used in the 3GPP system and thus may result in the assignment of a new IP address for the WTRU.

Although the elements in the Figures are illustrated as separate elements, these elements may be implemented on a single integrated circuit (IC), such as an application specific integrated circuit (ASIC), multiple ICs, discrete components, or a combination of discrete components and IC(s). Although the features and elements of the present invention are described in the preferred embodiments in particular combinations, each feature or element can be used alone without the other features and elements of the preferred embodiments or in various combinations with or without other features and elements of the present invention. Furthermore, the present invention may be implemented in any type of wireless communication system.

### Embodiments

1. In an area where a plurality of wireless communication systems are deployed with overlapping coverage areas wherein each wireless communication system implements a different radio access technology (RAT) and are configured such that a service that is provided by one wireless communication system may be provided through the other wireless communication system, a method for switching a RAT between the wireless communication systems with a multi-mode wireless transmit/receive unit (WTRU) configured to support more than one RAT, comprising:
   each wireless communication system transmitting an indication of existence of an inter-working wireless communication system implementing a different RAT which is available in a coverage area of each wireless communication system;
   the WTRU receiving the indication through a currently connected wireless communication system;
   the WTRU receiving information regarding the inter-working wireless communication system where it is determined to handoff the WTRU to the inter-working wireless communication system; and
   the WTRU initiating a handoff to the inter-working wireless communication system using the received information,
   whereby the WTRU continues to receive the same services that the WTRU received from the currently connected wireless communication system through the inter-working wireless communication system.
2. The method of embodiment 1 wherein the indication is broadcast to the WTRU.
3. The method of embodiment 1 wherein the indication is transmitted to the WTRU through a dedicated control channel for the WTRU.
4. The method of embodiment 3 wherein the indication is transmitted in response to a report specifying the capability of the WTRU to support the RAT of the inter-working wireless communication system.
5. The method of embodiment 4 wherein the information regarding the inter-working wireless communication system is transmitted along with the indication.
6. The method of embodiment 1 wherein the wireless communication systems are a wireless local area network (WLAN) and a universal mobile telecommunication system (UMTS) terrestrial radio access network (UTRAN).
7. The method of embodiment 6 wherein the WTRU establishes a connection with the UTRAN and receives an indication regarding availability of a WLAN within the coverage of a UTRAN cell.
8. The method of embodiment 7 wherein the indication includes a service set identity (SSID) of the WLAN available within the UTRAN cell.
9. The method of embodiment 7 wherein the information includes a location of the WLAN and public land mobile network identity.
10. The method of embodiment 7 wherein an association to the WLAN is based on channel quality measurement.
11. The method of embodiment 7 wherein connection security is enabled by wired equivalent privacy (WEP) information.
12. The method of embodiment 1 wherein the handoff is initiated autonomously.
13. The method of embodiment 1 wherein the availability of the inter-working wireless communication system is alerted to the user.
14. The method of embodiment 13 wherein the handoff is initiated upon request of a user.
15. The method of embodiment 1 wherein a new internet protocol (IP) address is provided after handoff.
16. A system for switching a radio access technology (RAT) between wireless communication systems comprising:
   a plurality of wireless communication systems, each wireless communication system implementing a different RAT and having at least partially overlapping coverage areas, each wireless communication system comprising:
      means for transmitting an indication of the existence of an inter-working wireless communication system which is available in an overlapping coverage area of the wireless communication systems wherein the systems are configured so that a service that is provided by one wireless communication system may be provided through the inter-working wireless communication system; and
      means for transmitting an information regarding the inter-working wireless communication system; and
   a wireless transmit/receive unit (WTRU) configured to support a plurality of RATs comprising:
      means for receiving the indication through a currently connected wireless communication system;
      means for receiving the information regarding the inter-working wireless communication system where the WTRU is to be handoff to the inter-working wireless communication system; and
      means for initiating a handoff to the inter-working wireless communication system using the received information,
   whereby the WTRU continues to receive the same services that the WTRU received from the currently connected wireless communication system through the inter-working wireless communication system.
17. The system of embodiment 16 wherein the indication is broadcast to the WTRU.
18. The system of embodiment 16 wherein the indication is transmitted to the WTRU through a dedicated channel for the WTRU.
19. The system of embodiment 18 wherein the indication is transmitted in response to a report of WTRU capability supporting the RAT of the inter-working wireless communication system.
20. The system of embodiment 18 wherein the information regarding the inter-working wireless communication system is transmitted along with the indication.
21. The system of embodiment 16 wherein the wireless communication systems are a wireless local area network (WLAN) and a universal mobile telecommunication system (UMTS) terrestrial radio access network (UTRAN).
22. The system of embodiment 16 wherein the WTRU established a connection with the UTRAN and receives an indication regarding the availability of WLAN through the UTRAN.
23. The system of embodiment 22 wherein the indication includes a service set identity of the WLAN available in the UTRAN.
24. The system of embodiment 22 wherein the information includes a location of the WLAN and public land mobile network identity.
25. The system of embodiment 22 wherein an association to the WLAN is based on channel quality measurement.
26. The system of embodiment 22 wherein connection security is enabled by wired equivalent privacy (WEP) information.
27. The system of embodiment 16 wherein the handoff is initiated autonomously.
28. The system of embodiment 16 wherein an alert to the user is provided indicating the availability of the inter-working wireless communication system.
29. The system of embodiment 28 wherein the handoff is initiated upon user's request.
30. The system of embodiment 16 wherein a new internet protocol (IP) address is provided after handoff.
31. In an area where a plurality of wireless communication systems are deployed with overlapping coverage areas wherein each wireless communication system implements a different radio access technology (RAT) and are configured such that a service that is provided by one wireless communication system may be provided through the other wireless communication system, a method for switching a RAT between the wireless communication systems with a multi-mode wireless transmit/receive unit (WTRU) configured to support more than one RAT, comprising:
   each wireless communication system transmitting information regarding an inter-working wireless communication system implementing a different RAT which is available in a coverage area of each wireless communication system;
   the WTRU receiving the information through a currently connected wireless communication system; and
   the WTRU initiating a handoff to the inter-working wireless communication system using the information,
   whereby the WTRU continues to receive the same services that the WTRU received from the currently connected wireless communication system through the inter-working wireless communication system.
32. The method of embodiment 31 wherein the transmitted information regarding an inter-working wireless communication system is a list of service set identifiers (SSIDs).
33. The method of embodiment 32 wherein the inter-working wireless communication system is a wireless local area network (WLAN).
34. A system for switching a radio access technology (RAT) between wireless communication systems comprising:
   a plurality of wireless communication systems, each wireless communication system implementing a different RAT and having at least partially overlapping coverage areas, each wireless communication system comprising:
      means for transmitting information regarding an inter-working wireless communication system which is available in an overlapping coverage area of the wireless communication systems wherein the systems are configured so that a service that is provided by one wireless communication system may be provided through the inter-working wireless communication system; and
   a wireless transmit/receive unit (WTRU) configured to support a plurality of RATs comprising:
      means for receiving the information through a currently connected wireless communication system; and
      means for initiating a handoff to the inter-working wireless communication system using the received information,
      whereby the WTRU continues to receive the same services that the WTRU received from the currently connected wireless communication system through the inter-working wireless communication system.
35. The system of embodiment 34 wherein the information regarding an inter-working wireless communication system is a list of service set identifiers (SSIDs).
36. The system of embodiment 35 wherein the inter-working wireless communication system is a wireless local area network (WLAN).
37. The system of embodiment 34 wherein the WTRU only receives the information where it is determined that the WTRU is to be handed off to the inter-working wireless communication system.

## Claims

1. A method for use in a wireless transmit/receive unit, WTRU, the method comprising:
receiving a service from a core network via a cellular access network;
receiving a message via the cellular access network, wherein the message includes information that identifies one or more Wireless Local Area Networks, WLANs;
selecting one of the WLANs from the message; and
receiving the service from the core network via the selected WLAN.

2. The method of claim 1, further comprising:
initiating a handover to the selected WLAN.

3. The method of claim 1, further comprising:
performing a handover to the selected WLAN;
wherein the receiving the service from the core network via the selected WLAN is performed upon completion of the handover to the selected WLAN.

4. The method of any one of the preceding claims, further comprising:
sending a second message via the cellular access network, the second message indicating that the WTRU is capable of communicating using wireless local area network, WLAN, technology.

5. The method of claim 4, wherein the message that includes information that identifies the one or more WLANs is responsive to the second message.

6. The method of any one of the preceding claims, wherein the information that identifies the one or more WLANs includes Service Set Identifiers, SSIDs, of the one or more WLANs.

7. The method of any one of the preceding claims, wherein the message that includes information that identifies the one or more WLANs further includes location information related to the one or more WLANs.

8. The method of any one of the preceding claims, further comprising:
scanning for the one or more WLANs that are identified in the message.

9. The method of any one of the preceding claims, wherein the selecting one of the WLANs is based on a channel quality measurement.

10. The method of any one of the preceding claims, wherein the selecting one of the WLANs is based on input from a user of the WTRU.

11. The method of any one of the preceding claims, wherein the selecting one of the WLANs is based on requirements of the service.

12. The method of any one of the preceding claims, wherein the receiving the service via the selected WLAN includes receiving the service via a packet data gateway (PDG).

13. A wireless transmit/receive unit, WTRU, comprising:
means for receiving a service from a core network via a cellular access network;
means for receiving a message via the cellular access network, wherein the message includes information that identifies one or more Wireless Local Area Networks, WLANs;
means for selecting one of the WLANs from the message; and
means for receiving the service from the core network via the selected WLAN.

14. The WTRU of claim 13, further comprising*
means for initiating a handover to the selected WLAN.
